# EUROPEAN PATENT APPLICATION

(11) **EP 4 039 663 A1**
(43) Date of publication of application: **10.08.2022**
(21) Application number: 21305159.2
(22) Date of filing: 05.02.2021
(51) Int. Cl.: C04B 35/01, C04B 35/26, C04B 35/44, C04B 35/626, C01F 17/34, C01G 15/00, C09K 11/77, C03B 32/00, C03C 10/00

(54) **CERAMIC MATERIAL WITH A GARNET STRUCTURE SHOWING A NON-STOICHIOMETRY, SYNTHESIS AND USES THEREOF**

(71) Applicant: Centre national de la recherche scientifique, 75016 Paris (FR); Consejo Superior de Investigaciones Científicas (CSIC), 28006 Madrid (ES)
(72) Inventor: ALLIX, Mathieu, 45160 OLIVET (FR); BECERRO, Ana Isabel, 41003 SÉVILLE (ES); CAO, Weiwei, 45071 ORLÉANS CEDEX 2 (FR); PITCHER, Michael, 45430 BOU (FR)
(74) Representative: Novagraaf Technologies

(57) **Abstract**

The present invention belongs to the field of ceramic material, more specifically to ceramic material of use in optical applications, particularly luminescence.

The present invention relates to a new ceramic material with a garnet structure of formula I: A_{3+x-y}B_{5-x-z}C_{y+z}O₁₂, wherein, A represents at least one rare earth element; B represents scandium, at least one transition metal and/or post-transition metal element, C represents at least one lanthanide, transition metal and/or post-transition metal element different from A or B, x is strictly superior to 0.01 and inferior or equal to 0.5, y is superior or equal to 0 and inferior or equal to 0.7, z is superior or equal to 0 and inferior or equal to 0.7 and y + z ≤ 0.7, showing non-stoichiometry (ranging from small to strong contents). The invention also relates to the synthetic method to obtain the new ceramic material of the invention and uses thereof.

## Description

### Technical field

The present invention belongs to the field of ceramic material, more specifically to ceramic material of use in optical applications, particularly luminescence.

The present invention relates to a new ceramic material with a garnet structure of formula I: A_{3+x-y}B_{5-x-z}C_{y+z}O₁₂, wherein, A represents at least one rare earth element; B represents scandium, at least one transition metal and/or post-transition metal element, C represents at least one lanthanide, transition metal and/or post-transition metal element different from A or B, x is strictly superior to 0.01 and inferior or equal to 0.5, y is superior or equal to 0 and inferior or equal to 0.7, z is superior or equal to 0 and inferior or equal to 0.7 and y + z ≤ 0.7, showing non-stoichiometry (ranging from small to strong contents). The invention also relates to the synthetic method to obtain the new ceramic material of the invention and uses thereof.

In the description below, references between [] refer to the list of references at the end of the examples.

### Technical background

YAG (Y₃Al₅O₁₂) is a very well-known material. It is usually marketed for various optical applications, particularly luminescence applications, especially when it is doped with rare earth elements. YAG is a material used in most white lights on the market today. Other doped garnet structures are also marketed for luminescence or scintillation properties. Doped garnet structures show high intensity luminescent emissions, making them interesting for optical applications, particularly luminescence applications.

All these known garnet materials, of stoichiometric composition (A₃B₅O₁₂) have optical emissions at well-defined wavelengths. The optical emissions vary according to the nature of the rare earth element used, in the structure but also for doping. The emission wavelengths may also be related to the local symmetry of the doping rare earth element.

Industrial needs for materials with optical properties (luminescence, scintillation) are currently met by various materials with efficient emission properties. Garnet materials are commercial materials that are widely used today. The yellow emission of YAG:Ce³⁺ (Y_{3-y}Ce_{y}Al₅O₁₂ with y = 0.02 for example) material, for example, is widely used in most of the white LED-based lighting devices, in domestic and public lighting: (LEDs emit blue light which is converted to white light thanks to the addition of the yellow emission of Ce-doped YAG).

As discussed above, stoichiometric garnet structural materials allow commercial applications, such as doped YAG (Y₃Al₅O₁₂) used for white solid state lighting (LEDs) and laser gain media.

Although existing materials have well-defined emission wavelengths, they still have limited emission wavelengths. For example, the colour of the emission of the stoichiometric YAG cannot be adjusted, which is a current hurdle for many applications requiring a "warmer" light, i.e. with a red component. For example, the YAG material used in LED lighting is "cold", i.e. the light emitted is too blue.

On the other hand, the emissions of stoichiometric materials such as YAG, although intense, still require improvement to increase tunability and emitted intensity.

There is therefore a need to improve the emission wavelengths range and versatility of the existing materials, but also to increase their efficiency.

There is a need to access new emission colours and more intense emissions compared to the known garnet based materials that are used today.

In Journal of the European Ceramic Society 34 (2014) 783-790 **[1]**, the authors tried to synthesise nonstoichiometric yttrium aluminium garnet as transparent ceramics. They tried several compositions ranging from an excess of Al to an excess of Y corresponding to x = 0.01 in our formulation. In the end, they only report that a x = 0.01 composition may have been prepared. This compound appears to be not satisfying to the authors because the luminescence properties were apparently not affected compared to the stoichiometric compound.

Thus, according to the knowledge of the Applicants, no satisfying way of expanding the range of garnet material has been found yet.

These new and amplified properties of the ceramic material according to the invention have not been observed yet. The invention thus proposes improvements in both colour tunability and increased emitted intensity over existing garnet materials.

### Detailed description of the invention

Applicant has developed a new ceramic material with a garnet structure showing a non-stoichiometry that solves the problem listed above. The ceramic material with a garnet structure showing a non-stoichiometry represents an improvement in both colour emission tunability and emitted intensity over existing garnet materials.

The present invention deals with a new ceramic material with a garnet structure showing a non-stoichiometry:

A_{3+x-y}B_{5-x-z}C_{y+z}O₁₂ Formula I

wherein,
- A represents at least one rare earth element, preferably A is chosen in the group comprising yttrium and lanthanides, and mixtures thereof, more preferably in the group comprising yttrium, lanthanum, cerium, praseodymium, neodymium, samarium, europium, gadolinium, terbium, dysprosium, holmium, erbium, thulium, ytterbium, lutetium and mixtures thereof.
- B represents scandium, at least one transition metal and/or post-transition metal element, preferably B is chosen in the group comprising scandium, aluminium, gallium, iron, manganese, cobalt, and mixtures thereof, and more preferably aluminium, gallium and mixtures thereof,
- C represents at least one lanthanide, transition metal and/or post-transition metal element different from A or B, preferably C is chosen in the group comprising cerium, praseodymium, neodymium, samarium, europium, gadolinium, terbium, dysprosium, holmium, erbium, thulium, ytterbium, bismuth, chromium, manganese, nickel, titanium and mixtures thereof,
- x is strictly superior to 0.01 and inferior or equal to 0.5, 0.01 < x ≤ 0.5, preferably 0.05 ≤ x ≤ 0.4, and more preferably 0.1 ≤ x ≤ 0.3,
- y is superior or equal to 0 and inferior or equal to 0.7, 0 ≤ y ≤ 0.7,
- z is superior or equal to 0 and inferior or equal to 0.7, 0 ≤ z ≤ 0.7, and
- y+z≤0.7.

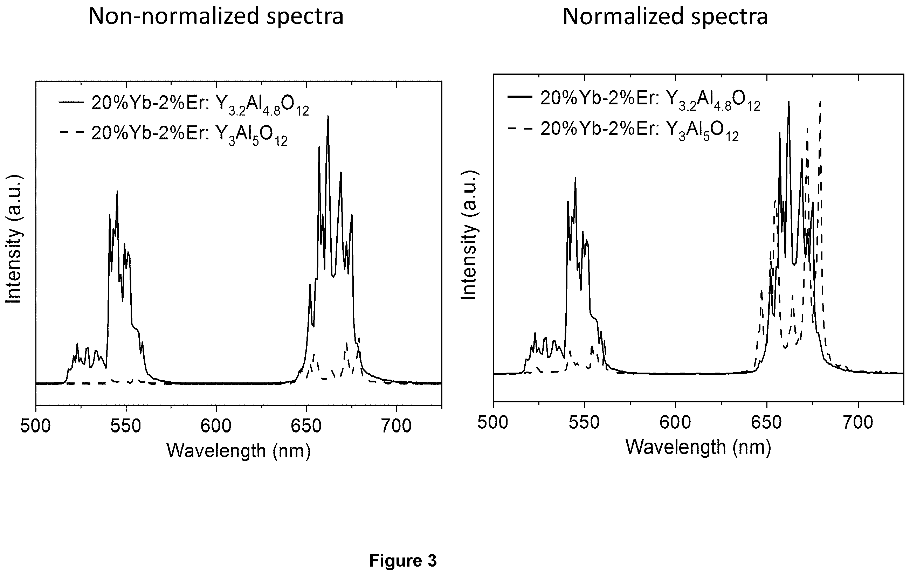

Applicant surprisingly found out that the new ceramic material with a garnet structure showing a non-stoichiometry according to the invention has the following advantages:
- the ceramic materials according to the invention have innovative luminescence properties arising from the presence of rare earth (RE) cations on the B site of the garnet structure (this is not observed in stoichiometric garnet materials) when the samples are doped;
- the ceramic materials according to the invention show a different emission colour when compared to the known stoichiometric ceramic materials (rare-earth doping on the B site induces slightly different crystal-field effect compared to the one associated to RE doping on the A site);
- the ceramic materials according to the invention have more intense emissions (up to 10x greater than stoichiometric YAG have been observed for some doping contents); see for example the provided figure 3 showing emission properties of the 20%Yb-2%Er:Y₃Al₅O₁₂ (Yb_{0.6}Er₀.₀₆Y_{2.34}Al₆O₁₂) and 20%Yb-2%Er:Y_{3,2}Al_{4,8}O₁₂ (Yb_{0.64}Er_{0.064}Y_{2.496}Al_{4.8}O₁₂) compositions;

- the ceramic material according to the invention have improved quantum yields compared to the known material;
- thanks to the above discussed emission properties the ceramic materials according to the invention have more efficient applications, and can be used in devices such as lighting to obtain brighter emissions, and/or smaller amounts of photoluminescent material used, compared to known stoichiometric YAG materials;
- the ceramic materials according to the invention are easy to obtain, by a process which is not only fast but cost efficient; the preparation of ceramics from a mixture of powder precursors only requiring a few seconds (less than a minute).

In the context of the invention, it is meant by "non-stoichiometric", a ceramic material which composition deviates from its usual stoichiometry because of the presence of defects inducing this composition change. For example, Y₃Al₅O₁₂ is a stoichiometric garnet composition but Y₃₊ₓAl₅₋ₓO₁₂ (0 < x < 0.5) is a non-stoichiometric garnet composition. The composition has been modified by the presence of defects (Y atoms going on Al site).

Scandium is the chemical element with atomic number 21, symbol Sc. It is usually considered a soft transition metal with a silver-white appearance. It is classified together with yttrium and lanthanides in the rare earths. Preferably, according to the invention, Sc is not considered as a rare earth according to the definition of A. Thus, according to the invention, rare earth elements are considered to be yttrium and lanthanides.

The efficiency of a photoluminescence material is usually given as the "quantum yield" (QY), which is the number of emitted photons divided by the number of absorbed photons. The higher the QY, the higher the efficiency of the material.

Advantageously, the ceramic material according to the invention may be chosen in the group of ceramic material of formula I wherein, A represents at least one rare earth element. A may be preferably chosen in the group comprising yttrium and lanthanides, and mixtures thereof. A may represents at least one rare earth element chosen in the group comprising yttrium, lanthanum, cerium, praseodymium, neodymium, samarium, europium, gadolinium, terbium, dysprosium, holmium, erbium, thulium, ytterbium, lutetium and mixtures thereof. A may more preferably represent at least one rare earth element chosen in the group comprising yttrium, erbium, gadolinium, samarium, neodymium, lutetium and mixtures thereof, and more preferably yttrium, gadolinium and mixtures thereof. A may preferably represents at least one rare earth element chosen in the group comprising yttrium, erbium, gadolinium, samarium and mixtures thereof. A may preferably represent at least one rare earth element chosen in the group comprising yttrium, lanthanum, gadolinium, lutetium and mixtures thereof when the ceramic material is meant to be used in luminescence applications.

Advantageously, A may represent at least one rare earth element chosen in the group comprising yttrium, erbium, gadolinium, samarium, neodymium, lutetium and mixtures thereof. A may represent at least one rare earth element chosen in the group comprising yttrium, erbium, gadolinium, samarium, neodymium, lanthanum, lutetium and mixtures thereof, preferably yttrium, lanthanum, gadolinium, lutetium and mixtures thereof. A may represent at least one rare earth element chosen in the group comprising yttrium, lanthanum, erbium, gadolinium, terbium, samarium, neodymium, lutetium and mixtures thereof and preferably yttrium, lanthanum, gadolinium, lutetium and mixtures thereof. A may preferably represent at least one rare earth element chosen in the group comprising yttrium, terbium, erbium, gadolinium, samarium, neodymium, ytterbium, lutetium and mixtures thereof. A may preferably represent at least one rare earth element chosen in the group comprising yttrium, erbium, gadolinium, terbium, samarium, neodymium, lutetium and mixtures thereof.

Advantageously, the ceramic material according to the invention may be chosen in the group of ceramic material of formula I wherein, B represents scandium, at least one transition metal and/or post-transition metal element. B may be preferably chosen in the group comprising scandium, aluminium, gallium, iron, manganese, cobalt, and mixtures thereof. B may more preferably be chosen in the group comprising aluminium, gallium and mixtures thereof. B may represent at least one transition metal or post-transition metal element chosen in the group comprising aluminium, gallium, iron, manganese, cobalt and scandium and mixtures thereof and more preferably aluminium, gallium and mixtures thereof.

Advantageously, the ceramic material according to the invention may be chosen in the group of ceramic material of formula I wherein, C represents at least one lanthanide, transition metal and/or post-transition metal element different from A or B, preferably chosen in the group comprising cerium, praseodymium, neodymium, samarium, europium, gadolinium, terbium, dysprosium, holmium, erbium, thulium, ytterbium, bismuth, chromium, manganese, nickel, titanium and mixtures thereof. C may preferably represent at least one lanthanide, transition metal or post-transition metal element different from A or B, chosen in the group comprising gadolinium, terbium, dysprosium, holmium, erbium, thulium, ytterbium, manganese and mixtures thereof, and more preferably chosen in the group comprising cerium, dysprosium, ytterbium, erbium, manganese and mixtures thereof.

Advantageously, C may represent at least one lanthanide, transition metal or post-transition metal element different from A or B, chosen in the group comprising gadolinium, terbium, dysprosium, holmium, erbium, thulium, ytterbium and mixtures thereof. C may represent at least one lanthanide, transition metal or post-transition metal element different from A or B, chosen in the group comprising chromium, cerium, neodymium, gadolinium, terbium, dysprosium, holmium, erbium, thulium, ytterbium and mixtures thereof. C may represent at least one lanthanide, transition metal or post-transition metal element different from A or B, chosen in the group comprising europium, gadolinium, terbium, dysprosium, holmium, erbium, thulium, ytterbium, chromium and mixtures thereof. C may represent at least one rare earth, transition metal or post-transition metal element different from A or B, chosen in the group comprising europium, gadolinium, terbium, dysprosium, holmium, erbium, thulium, ytterbium and mixtures thereof. C may represent at least one lanthanide, transition metal or post-transition metal element different from A or B, chosen in the group comprising cerium, praseodymium, neodymium, samarium, europium, gadolinium, and mixtures thereof.

Advantageously, the ceramic material according to the invention may be chosen in the group of ceramic material of formula I wherein, x is strictly superior to 0.01 and inferior or equal to 0.5, 0.01 < x ≤ 0.5. x may be superior or equal to 0.05 and inferior or equal to 0.4, 0.05 ≤ x ≤ 0.4. x may preferably be superior or equal to 0.1 and inferior or equal to 0.3, 0.1 ≤ x ≤ 0.3. Depending on the aimed application, the value of x may be adapted within these ranges.

Advantageously, the ceramic material according to the invention may be chosen in the group of ceramic material of formula I wherein, y is superior or equal to 0.001 and inferior or equal to 0.7, 0.001 ≤ y ≤ 0.7. For example, for up-conversion solid state lighting or laser application y may be from 0.3 to 0.7. For persistent luminescence applications, y may be from 0.001 to 0.07.

Advantageously, the ceramic material according to the invention may be chosen in the group of ceramic material of formula I wherein, z is superior or equal to 0 and inferior or equal to 0.7, 0.001 ≤ z ≤ 0.7. Depending on the aimed application the value of z may be adapted. For example, for solid state lighting or laser applications, z may be from 0.3 to 0.7. For persistent luminescence applications, z may be from 0.001 to 0.07.

Advantageously, y + z ≤ 0.7. For example, y may be 0 and z may be ≤ 0.7. z may be 0 and y may be ≤ 0.7.

Advantageously, the ceramic material according to the invention may be chosen in the group of ceramic material of formula II:

A_{3+x-y}B_{5-x-z}C_{y+z}O₁₂ Formula II

wherein,
- A represents at least one rare earth element chosen in the group comprising yttrium, erbium, gadolinium, samarium, neodymium, lutetium and mixtures thereof and preferably yttrium, gadolinium, lutetium and mixtures thereof,
- B represents at least one transition metal or post-transition metal element chosen in the group comprising aluminium, gallium, iron, manganese, cobalt and scandium and mixtures thereof,
- C represents at least one lanthanide, transition metal or post-transition metal element different from A or B, chosen in the group comprising gadolinium, terbium, dysprosium, holmium, erbium, thulium, ytterbium and mixtures thereof,
- x is strictly superior to 0.01 and inferior or equal to 0.5, 0.01 < x ≤ 0.5, preferably 0.05 ≤ x ≤ 0.4, and more preferably 0.1 ≤ x ≤ 0.3,
- y is superior or equal to 0 and inferior or equal to 0.7, 0 ≤ y ≤ 0.7,
- z is superior or equal to 0 and inferior or equal to 0.7, 0 ≤ z ≤ 0.7, and
- y+z≤0.7.

Advantageously, the ceramic material according to the invention may be chosen in the group of ceramic material of formula II wherein, A is yttrium, B is aluminium and C is chosen in the group comprising ytterbium, erbium, holmium, thulium and mixtures thereof. Preferably, C represents a mixture of ytterbium and erbium, ytterbium and thulium or ytterbium and holmium.

Advantageously, the ceramic material according to the invention may be chosen in the group of ceramic material of formula III:

Y_{3+x-y}B_{5-x-z}C_{y+z}O₁₂ Formula III

wherein,
- B represents at least one transition metal or post-transition metal element chosen in the group comprising aluminium, gallium, iron, cobalt, manganese and scandium and mixtures thereof,
- C represents at least one lanthanide, transition metal or post-transition metal element different from A or B, chosen in the group comprising chromium, cerium, neodymium, gadolinium, terbium, dysprosium, holmium, erbium, thulium, ytterbium and mixtures thereof,
- x is strictly superior to 0.01 and inferior or equal to 0.5, 0.01 < x ≤ 0.5, preferably 0.05 ≤ x ≤ 0.4, and more preferably 0.1 ≤ x ≤ 0.3,
- y is superior or equal to 0 and inferior or equal to 0.7, 0 ≤ y ≤ 0.7,
- z is superior or equal to 0 and inferior or equal to 0.7, 0 ≤ z ≤ 0.7, and
- y+z≤0.7.

Advantageously, the ceramic material according to the invention may be chosen in the group of ceramic material of formula III wherein, B is chosen in the group comprising aluminium, gallium and mixtures thereof and C is chosen in the group comprising erbium, ytterbium, cerium, neodymium, chromium and mixtures therein). x may be 0.01 < x ≤ 0.5. y may be 0.001 ≤ y ≤ 0.07. z may be 0.001 ≤ z ≤ 0.07.

Advantageously, the ceramic material according to the invention may be chosen in the group of ceramic material of formula IV:

A_{3+x-y}Al_{5-x+z}C_{y-z}O₁₂ Formula IV

wherein,
- A represents at least one rare earth element chosen in the group comprising yttrium, erbium, gadolinium, samarium, neodymium, lanthanum, lutetium and mixtures thereof, preferably yttrium, lanthanum, gadolinium, lutetium and mixtures thereof,
- C represents at least one rare earth, transition metal or post-transition metal element different from A or B, chosen in the group comprising europium, gadolinium, terbium, dysprosium, holmium, erbium, thulium, ytterbium, chromium and mixtures thereof,
- x is strictly superior to 0.01 and inferior or equal to 0.5, 0.01 < x ≤ 0.5, preferably 0.05 ≤ x ≤ 0.4, and more preferably 0.1 ≤ x ≤ 0.3,
- y is superior or equal to 0 and inferior or equal to 0.7, 0 ≤ y ≤ 0.7,
- z is superior or equal to 0 and inferior or equal to 0.7, 0 ≤ z ≤ 0.7, and
- y+z≤0.7.

Advantageously, the ceramic material according to the invention may be chosen in the group of ceramic material of formula IV wherein, A is chosen in the group comprising yttrium, lanthanum, gadolinium, lutetium and mixtures thereof, preferably gadolinium and C is chosen in the group ytterbium, erbium, thulium, holmium, chromium and mixtures thereof, preferably ytterbium, erbium and mixtures thereof.

Advantageously, the ceramic material according to the invention may be chosen in the group of ceramic material of formula V:

A_{3+x-y}Ga_{5-x+z}C_{y+z}O₁₂ Formula V

wherein,
- A represents at least one rare earth element chosen in the group comprising yttrium, lanthanum, erbium, gadolinium, terbium, samarium, neodymium, lutetium and mixtures thereof and preferably yttrium, lanthanum, gadolinium, lutetium and mixtures thereof,
- C represents at least one rare earth, transition metal or post-transition metal element different from A or B, chosen in the group comprising europium, gadolinium, terbium, dysprosium, holmium, erbium, thulium, ytterbium and mixtures thereof,
- x is strictly superior to 0.01 and inferior or equal to 0.5, 0.01 < x ≤ 0.5, preferably 0.05 ≤ x ≤ 0.4, and more preferably 0.1 ≤ x ≤ 0.3,
- y is superior or equal to 0 and inferior or equal to 0.7, 0 ≤ y ≤ 0.7,
- z is superior or equal to 0 and inferior or equal to 0.7, 0 ≤ z ≤ 0.7, and
- y+z≤0.7.

Advantageously, the ceramic material according to the invention may be chosen in the group of ceramic material of formula V wherein, A is chosen in the group comprising gadolinium, terbium and mixtures thereof, preferably gadolinium and C is chosen in the group europium, terbium, dysprosium and mixtures thereof, preferably europium. x may be 0.1 ≤ x ≤ 0.3 and y + z ≤ 0.3.

Advantageously, the ceramic material according to the invention may be chosen in the group of ceramic material of formula VI:

A₃₊ₓAl₅₋ₓO₁₂ Formula VI

wherein,
- A represents at least one rare earth element chosen in the group comprising yttrium, terbium, erbium, gadolinium, samarium, neodymium, ytterbium, lutetium and mixtures thereof,
- x is strictly superior to 0.01 and inferior or equal to 0.5, 0.01 < x ≤ 0.5, preferably 0.05 ≤ x ≤ 0.4, and more preferably 0.1 ≤ x ≤ 0.3.

Advantageously, the ceramic material according to the invention may be chosen in the group of ceramic material of formula VI wherein, A is chosen in the group yttrium, gadolinium, lutetium, terbium and mixtures thereof, preferably terbium. x may be 0.01 < x ≤ 0.3.

Advantageously, the ceramic material according to the invention may be chosen in the group of ceramic material of formula VII:

A₃₊ₓGa₅₋ₓO₁₂ Formula VII

wherein,
- A represents at least one rare earth element chosen in the group comprising yttrium, erbium, gadolinium, terbium, samarium, neodymium, lutetium and mixtures thereof,
- x is strictly superior to 0.01 and inferior or equal to 0.5, 0.01 < x ≤ 0.5, preferably 0.05 ≤ x ≤ 0.4, and more preferably 0.1 ≤ x ≤ 0.3.

Advantageously, the ceramic material according to the invention may be chosen in the group of ceramic material of formula VII wherein, A is chosen in the group yttrium, gadolinium, lutetium, terbium and mixtures thereof, preferably terbium. x may be 0.01 < x ≤ 0.3.

Advantageously, the ceramic material according to the invention may be chosen in the group of ceramic material of formula VIII:

Y_{3-x-y}Al₅₋ₓC_{y}O₁₂ Formula VIII

wherein,
- C represents at least one rare earth element different from A or B, chosen in the group comprising cerium, praseodymium, neodymium, samarium, europium, gadolinium and mixtures thereof,
- x is strictly superior to 0.01 and inferior or equal to 0.5, 0.01 < x ≤ 0.5, preferably 0.05 ≤ x ≤ 0.4, and more preferably 0.1 ≤ x ≤ 0.3,
- y is superior or equal to 0 and inferior or equal to 0.7, 0 ≤ y ≤ 0.7.

Advantageously, the ceramic material according to the invention may be chosen in the group of ceramic material of formula VIII wherein, C is chosen in the group comprising cerium, praseodymium, neodymium, samarium, europium, gadolinium and mixtures thereof, preferably neodymium. x may be 0.01 < x ≤ 0.5. y may be 0.001 ≤ y ≤ 0.1.

Advantageously, the ceramic material according to the invention may be chosen in the group of ceramic material of formula IX:

Y₃₊ₓAl₅₋ₓO₁₂ Formula IX

wherein,
- x is strictly superior to 0.01 and inferior or equal to 0.5, 0.01 < x ≤ 0.5, preferably 0.05 ≤ x ≤ 0.4, and more preferably 0.1 ≤ x ≤ 0.3.

Advantageously, the ceramic material according to the invention may be chosen in the group of ceramic material of formula IX wherein, x may be superior or equal to 0.1 and inferior or equal to 0.3, 0.1 ≤ x ≤ 0.3, preferably 0.1 ≤ x ≤ 0.28.

The invention also relates to a process of manufacture of the ceramic material according to the invention, comprising the steps:
a) mixing one least one A precursor, at least one B precursor and optionally at least one C precursor, the precursors preferably being oxides, according to the molar ratio of the ceramic material of formula I, II, III, IV, V, VI, VII, VIII or IX and pressing the mixture into pellet under an uniaxial pressure;
b) melting the pellet obtained in step a) at a temperature ≥ 1800°C, preferably at a temperature ≥ 2000°C, to obtain a molten bead;
c) quenching of the molten bead obtained in step b), preferably a shear quenching of the molten liquid by gas jets.

Advantageously, in step a) of the process according the invention, the precursors may be oxides of A, B and optionally C.

Advantageously, the precursors may be powders and may be mixed in presence of an organic solvent (preferably alcohol, more preferably ethanol) and dried (to remove residual solvent).

Advantageously, in step a) of the process according the invention, the mixture may be pressed under an uniaxial pressure of from 4 to 5 bars.

Advantageously, in step a) of the process according to the invention, the pressure may be applied for a duration of from 1 second to 1 minute.

Advantageously, in step b) of the process according the invention, the melting is done by means of laser. Preferably, the laser is a CO₂ laser or a pair of CO₂ lasers. The melting is preferably done while levitating the pellet in a flow of gas, preferably argon. The levitation gas may be any kinds of levitation gas, either pure or in mixtures. Step b) may be done under either oxidizing atmospheres (such as a mixture of gas rich in O2), or under inert atmospheres (such as N₂ or Ar) or even under reducing atmospheres (such as H₂). The interest of working with different atmospheres lies mainly in the fact that it is possible to control the degree of oxidation of possible elements with multiple oxidation degrees. For example iron can be Fe²⁺, Fe³⁺ or Fe⁴⁺. The more oxidizing the atmosphere, the more chances there will be to go towards 4+. And the more reducing the atmosphere is, the more chances there will be to go towards Fe²⁺. Some lanthanides have several degrees of oxidation (Ce³⁺/Ce⁴⁺ or Eu²⁺/Eu³⁺) and the material will show different optical properties depending on the oxidation degree obtained. If one does not have a constraint on the degrees of oxidation we prefer to use argon which ensures a more stable levitation since argon is a dense gas. The skilled person is thus able to choose any levitating gas in agreement with the desired degree of oxidation that is pursued. Thus, the gas may be chosen in the groups comprising argon (Ar), dioxygen (O₂), nitrogen (N₂), helium (He) and hydrogen (H₂) and mixtures thereof, preferably argon, oxygen and mixtures of hydrogen and argon. The melting may also be done via a conventional induction or electric arc high-temperature melting industrial process.

Advantageously, step b) of the process according to the invention may have a duration of from 1 second to 1 minutes (usually from 5 seconds to 12 seconds).

Advantageously, in step c) of the process according to the invention, the reaction initiated in step b) is quenched. It is meant by "quenching", the action of cooling quickly the sample (preferably dropping the temperature at an average rate from 400 to 550 °C per second), from melting to solidification. Preferably, the quenching is a shear quenching of the molten liquid by gas jets. The gas may be chosen as in step b). During the quenching, the temperature rapidly drops from the temperature reached in step b) to a temperature of from 15 to 35 °C, preferably room temperature (usually from 20 to 30 °C). The cooling is not a linear process. When the lasers are switched of (and the quench starts) the temperature first drops quickly and then more slowly when it gets close to the room temperature. The important range is before solidification of the melt. Once the melt is solidified there are less changes. The critical period is thus between the melting temperature (1800°C to 2200°C depending on the compositions) and the solidification temperature which usually happens above 1000°C. So, according to the invention, when a quenching rate is given, it is an average value between about 2000°C and 1000°C. It makes a range from about 400 to 500°C/second; then it takes longer to reach room temperature.

Advantageously, in step c) of the process according to the invention, the quenching may last for a duration of from 1 second to 10 minutes, preferably from 1 second to 1 minute and more preferably from 1 second to 20 seconds, or from 2 to 12 seconds.

As discussed above the many advantages of the ceramic material according to the invention allows them to be used in many applications, such as a lighting article, a scintillation article or a long lasting luminescence article.

The invention thus also relates to a lighting article. The lighting article may be a luminescent material for lighting applications, such as a luminophore, a scintillator, a persistent luminescent material, a solid state lighting article (i.e. Ce-doped garnets because of its intense emission at 525 nm and its important role in converting blue emission to white light in InGaN light-emitting diodes), a laser gain medium (i.e. operating in the green region and in the 1.5 - 1.65 Im 'eye-safe' range that find applications in surgery, in long-distance telemetry and remote sensing), a temperature sensing article (i.e. temperature dependent luminescence of certain lanthanide ions such as Er and Mn), comprising a ceramic material according to the invention.

The invention also relates to a use of a ceramic material according to the invention in a lighting article. The lighting article may be a luminescent material for lighting applications, such as a luminophore, a scintillator, a persistent luminescent material, a solid state lighting article (i.e. Ce-doped garnets because of its intense emission at 525 nm and its important role in converting blue emission to white light in InGaN light-emitting diodes), a laser gain medium (i.e. operating in the green region and in the 1.5 - 1.65 Im 'eye-safe' range that find applications in surgery, in long-distance telemetry and remote sensing), a temperature sensing article (i.e. temperature dependent luminescence of certain lanthanide ions such as Er and Mn).

### Brief description of the figures

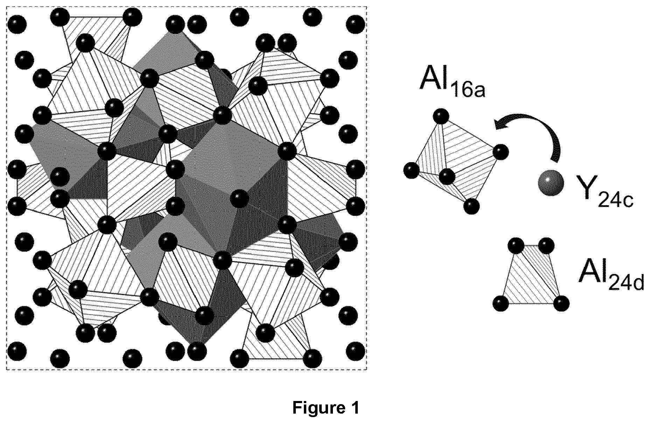

Figure 1 represents a garnet structure showing the possibility to induce A₅₊ₓB₃₋ₓO₁₂ non stoichiometry, i.e. the excess of rare-earth (A site) is entering in the octahedral (B) site. In this example A is Y and B is Al.

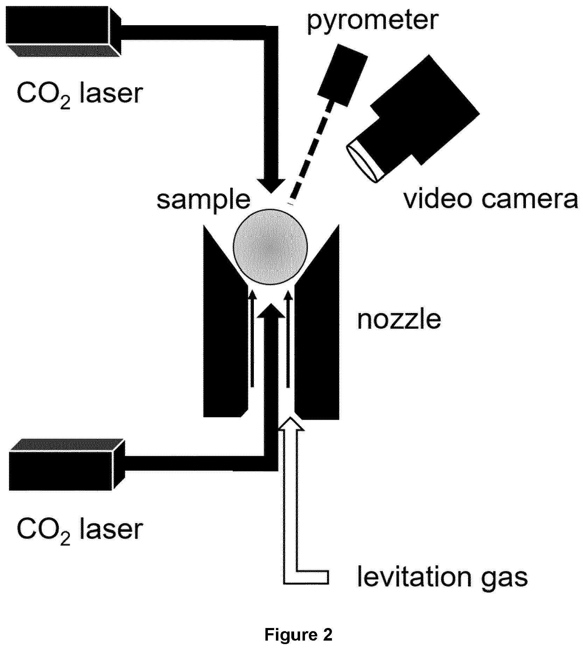

Figure 2 represents a scheme of the aerodynamic levitation (ADL) system coupled to CO₂ laser heating applied in step b) of the process according to the invention.
Figure 3 represents an emission spectra (λex = 980 nm) recorded on the 20%Yb-2%Er:Y₃Al₆O₁₂ (Yb_{0.6}Er_{0.06}Y_{2.34}Al₅O₁₂) and 20%Yb-2%Er:Y_{3,2}Al_{4,8}O₁₂ (Yb_{0.64}Er_{0.064}Y_{2.496}Al_{4.8}O₁₂) garnet samples. On the left the spectra are recorded in similar conditions to compared emission intensities. On the right the spectra are normalized to appreciate the colour variation.
Figure 4 represents (top) an emission spectra of the 20%Yb-2%Er:Y₃Al₅O₁₂ (s-YAG, Yb_{0.6}Er_{0.06}Y_{2.34}Al₆O₁₂) and 20%Yb-2%Er:Y_{3,2}Al_{4,8}O₁₂ (ns-YAG, Yb_{0.64}Er_{0.064}Y_{2.496}Al_{4.8}O₁₂) garnet samples obtained under 980 nm excitation; the inset is the CIE chromaticity diagram with the position of the colors corresponding to both samples and; (bottom) the integrated area of the red (left, 600 nm - 725 nm) and Green (right, 500 nm - 600 nm) emissions of the 20%Yb-2%Er :Y₃Al₅O₁₂ (s-YAG) and 20%Yb-2%Er: Y_{3,2}Al_{4,8}O₁₂ (ns-YAG) garnet samples.
Figure 5 represents the X-ray powder diffraction data (measured intensity as a function of 2 theta angle) of compositions 1 to 9 from table 14.

### EXAMPLES

### Example 1: Synthesis procedure of ceramic materials according to the invention

The starting materials except Nd₂O₃ were dried at 150 °C in the drying oven along the time and the absorptive Nd₂O₃ was dried at 1000 °C for 12 hours before they were weighed.

**Table 1: starting materials details**

| Composition | molar mass | purity | production company |
|---|---|---|---|
| Y₂O₃ | 225.8099 | 99.9% | STREM CHEMICALS |
| Al₂O₃ | 101.9613 | 99.999% | STREM CHEMICALS |
| MnO₂ | 86.9368 | 99.9% | STREM CHEMICALS |
| Fe₂O₃ | 159.6882 | 99.5% | Alfa Aesar |
| Ga₂O₃ | 187.4442 | 99.998% | STREM CHEMICALS |
| Sc₂O₃ | 137.91 | 99.9% | Alfa Aesar |
| CeO₂ | 172.1148 | 99.99% | STREM CHEMICALS |
| Nd₂O₃ | 336.4782 | 99.99+% | STREM CHEMICALS |
| Sm₂O₃ | 348.7182 | 99.9% | STREM CHEMICALS |
| Gd₂O₃ | 362.4982 | 99.99% | STREM CHEMICALS |
| Er₂O₃ | 382.5162 | 99.99% | STREM CHEMICALS |
| Yb₂O₃ | 394.0782 | 99.9% | STREM CHEMICALS |

High-purity A₂O₃ (A = Y, La, Ce, Pr, Nd, Sm, Eu, Gd, Tb, Dy Ho, Er, Tm, Yb and Lu) powder (STREM 99.99%, pre-dried at 1100 °C for 12 h in air), B₂O₃ (B = Al, Ga, Fe, Mn and Co) powder (STREM, 99.999%) and C₂O₃ (C = Ce, Pr, Nd, Sm, Eu, Gd, Tb, Dy, Ho, Er, Tm, Yb and Bi) were weighed according to the aimed molar ratio. The A₂O₃, B₂O₃ and C₂O₃ powders were mixed in an agate mortar under ethanol then dried at 100 °C to remove residual ethanol. The dry powder was then pressed into pellets under 4 bars uniaxial pressure. Pellet fragments of ∼30 mg were placed into the conical nozzle of the aerodynamic levitator system. The samples were heated by a pair of CO₂ lasers while levitating in a flow of gas (argon for all samples) at atmospheric pressure, with the temperature monitored in situ by an IR pyrometer. Melting of the reaction mixture occurred between 1800°C and 2200°C depending on the aimed composition (above 2000°C for aluminate compositions and below 2000°C for gallate compositions), and the samples were further heated several seconds slightly above their melting temperature to homogenize the melt. The lasers were then switched off from this high temperature, and avoiding any step at lower temperature to favour crystallisation of non-stoichiometric garnet compositions (metastable compositions). The occurrence of direct crystallization of the melt was indicated by an intense flash from the cooling bead. A careful cooling rate study was performed on the A_{3+x-y}B_{5-x-z}C_{y+z}O₁₂ compositions. Theirs cooling rates were calculated within the 2100 - 1300 °C range. No further heat treatment was applied to the quenched beads. The beads were then crushed and ground into powders for structural or optical characterizations. Quantity for these two characterizations is from 15 to 100 mg.

The following compounds were prepared according to the above procedure:

**Table 2: reaction conditions**

| | Synthesis temperature (melt) | Cooling duration (including quenching time) |
|---|---|---|
| **1. Non doped (y and z = 0) YAG-based compositions (Y₃₊ₓAl_{5-X}O₁₂** (x = **0-0.3)** | | |
| Y₃Al₅O₁₂ (not in the invention) | ∼ 2050 °C | ∼ 10 s |
| Y_{3.05}Al_{4.95}O₁₂ | ∼ 2050 °C | ∼ 10 s |
| Y₃₁₀Al4 | ∼ 2050 °C | ∼ 10 s |
| Y_{3.15}Al_{4.85}O₁₂ | ∼ 2050 °C | ∼ 10 s |
| Y_{3.20}Al_{4.80}O₁₂ | ∼ 2050 °C | ∼ 10 s |
| Y_{3.225}Al₄.₇₇₅O₁₂ | ∼ 2050 °C | ∼ 10 s |
| Y_{3.25}Al_{4.75}O₁₂ | ∼ 2050 °C | ∼ 10 s |
| Y_{3.275}Al_{4.725}O₁₂ | ∼ 2050 °C | ∼ 10 s |
| Y_{3.28}Al_{4.72}O₁₂ | ∼ 2050 °C | ∼ 10 s |

| **2. Doped (y and z ≠ 0) non-stoichiometric YAG (x=0.2)** | | |
|---|---|---|
| Ce_{0.064}Y_{3.136}Al₄.₈O₁₂ | ∼ 2100 °C | ∼ 10 s |
| Ce_{0.16}Y₃.₀₄Al_{4.8}O₁₂ | ∼ 2100 °C | ∼ 10 s |
| Dy_{0.032}Y_{3.168}Al_{4.8}O₁₂ | ∼ 2100 °C | ∼ 10 s |
| Y_{b0.64}Er_{0.064}Y_{2.496}Al_{4.8}O₁₂ | ∼ 2100 °C | ∼ 10 s |
| Mn_{0.016}Y_{3.184}Al_{4.8}O₁₂ | ∼ 2100 °C | ∼ 10 s |

| **3. Other non-stoichiometric garnet** | | |
|---|---|---|
| Er_{3.1}Al_{4.9}O₁₂ | ∼ 2100 °C | ∼ 10 s |
| Gd_{3.1}Ga_{4.9}O₁₂ | ∼ 1850-1950 °C | ∼ 10 s |
| Sm_{3.1}Ga_{4.9}O₁₂ | ∼ 1850-1950 °C | ∼ 10 s |
| Gd_{3.2}Ga_{4.8}O₁₂ | ∼ 1850-1950 °C | ∼ 10 s |
| Sm₃.₂Ga₄.₈O₁₂ | ∼ 1850-1950 °C | ∼ 10 s |

1. The s-YAG and ns-YAG compositions were synthesized in argon without applied pressure. They were heated at ∼ 2050 °C which is a little higher than their melting temperature and kept at this maximum temperature for around seven seconds to ensure a homogenous and equilibrium melting state.
2. The doped NS-YAG compositions were synthesized in argon without applied pressure. They were melt at temperatures higher than for the non-doped YAG compositions, and were kept at ∼ 2100-2200 °C because of the incorporation of dopants.
3. The new non-stoichiometric garnets were synthesized in argon without applied pressure. Er_{3.1}Al_{4.9}O₁₂ was heated at ∼ 2100 °C. And the other four Ga-containing compositions were heated ∼ 1850-1950 °C and kept at their maximum temperatures for a shorter time than other composition free off Ga to avoid the evaporation of Gallium.

### Characterization

**XRPD and SPD.** Phase identification of each composition was carried out at room temperature by X-ray powder diffraction (XRPD) using D8 Advance Bruker Bragg-Brentano diffractometer (Cu Kα radiation) equipped with a Vantec-1 linear detector. Structural analysis was performed with high quality XRPD or SPD data. The XRPD data collection was performed on powders over 12-130 ° with a 0.01 ° step size. Synchrotron X-ray powder diffraction (SPD) data were collected, at the Advanced Photon Source (Argonne National Laboratory, U. S. A.), by high-flux 11BM diffractometer at room temperature over 0.5 - 50 2 θ with a 0.001° step size and a λ = 0.457806 wavelength. The final structural information was obtained from the Rietveld refinement method using Topas Academic software. The crystallographic tables 3 - 7, 9 and 12 below were obtained from the structural refinement using the SPD data and 8, 10, 11 and 13 using XRPD data.

**Table 3:**

| **Y₃Al₅O₁₂** | | | | | | | |
|---|---|---|---|---|---|---|---|
| Site | Atom | Wyckoff position | x | y | z | Occupancy | Uisox100 |
| A | Y1 | 24c | 0.125 | 0 | 0.25 | 1 | 0.2(1) |
| B(VI) | Al1 | 16a | 0 | 0 | 0 | 1 | 0.3(1) |
| B(IV) | Al2 | 24d | 0.375 | 0 | 0.25 | 1 | 0.2(1) |
| O | O1 | 96h | - 0.03037(4) | 0.05030(4) | 0.14918(4) | 1 | 0.3(1) |
| *a = 12.007096(6) Å, *V*= 1731.067(3) Å³, space group la-3d, *Z* = 8 for Y₃Al₅O₁₂. | | | | | | | |

**Table 4 :**

| **Y_{3.05}Al₄.₉₅O₁₂** | | | | | | | |
|---|---|---|---|---|---|---|---|
| Site | Atom | Wyckoff position | x | y | z | Occupancy | Uisox100 |
| A | Y1 | 24c | 0.125 | 0 | 0.25 | 1 | 0.2(1) |
| B(VI) | Y2/ Al1 | 16a | 0 | 0 | 0 | 0.018(1) / 0.982(1) | 0.2(8) |
| B(IV) | Al2 | 24d | 0.375 | 0 | 0.25 | 1 | 0.2(2) |
| O | O1 | 96h | - 0.03037(4) | 0.05052(4) | 0.14941(4) | 1 | 0.3(2) |
| *a = 12.019441(8) Å, V= 1736.412(4) Å³, space group la-3d, *Z* = 8 for Y_{3.05}Al_{4.95}O₁₂. | | | | | | | |

**Table 5 :**

| **Y_{3.1}Al₄.₉O₁₂** | | | | | | | |
|---|---|---|---|---|---|---|---|
| Site | Atom | Wyckoff position | x | y | z | Occupancy | Uisox100 |
| A | Y1 | 24c | 0.125 | 0 | 0.25 | 1 | 0.4(1) |
| B(VI) | Y2 / Al1 | 16a | 0 | 0 | 0 | 0.050(1) / 0.950(1) | 0.3(8) |
| B(IV) | Al2 | 24d | 0.375 | 0 | 0.25 | 1 | 0.3(5) |
| O | O1 | 96h | - 0.03064(4) | 0.05082(4) | 0.14956(4) | 1 | 0.4(8) |
| *a = 12.035144(5) Å, *V* = 1743.726(3) Å³, space group la-3d, *Z* = 8 for Y₃.₁Al_{4.9}O₁₂. | | | | | | | |

**Table 6 :**

| **Y_{3.15}Al_{4.85}O₁₂** | | | | | | | |
|---|---|---|---|---|---|---|---|
| Site | Atom | Wyckoff position | x | y | z | Occupancy | Uisox100 |
| A | Y1 | 24c | 0.125 | 0 | 0.25 | 1 | 0.4(1) |
| B(VI) | Y2/ Al1 | 16a | 0 | 0 | 0 | 0.062(1) / 0.938(1) | 0.3(8) |
| B(IV) | Al2 | 24d | 0.375 | 0 | 0.25 | 1 | 0.3(5) |
| O | O1 | 96h | - 0.03064(4) | 0.05082(4) | 0.14956(4) | 1 | 0.4(8) |
| *a = 12.050277(6) Å V= 1743.227(3) Å³, space group la-3d, *Z* = 8 for Y₃.₁₅Al_{4.85}O₁₂. | | | | | | | |

**Table 7 :**

| **Y_{3.2}Al_{4.8}O₁₂** | | | | | | | |
|---|---|---|---|---|---|---|---|
| Site | Atom | Wyckoff position | x | y | z | Occupancy | Uisox100 |
| A | Y1 | 24c | 0.125 | 0 | 0.25 | 1 | 0.6(2) |
| B(VI) | Y2 / Al1 | 16a | 0 | 0 | 0 | 0.091 (4) / 0.909(1) | 0.2(9) |
| B(IV) | Al2 | 24d | 0.375 | 0 | 0.25 | 1 | 0.5(6) |
| O | O1 | 96h | - 0.03049(6) | 0.05146(5) | 0.15026(6) | 1 | 0.7(1) |
| *a = 12.069916(8) Å *V* = 1758.380(4) Å³, space group la-3d, *Z* = 8 for Y_{3.2}Al_{4.8}O₁₂. | | | | | | | |

**Table 8 :**

| **Y_{3.225}Al_{4.775}O₁₂** | | | | | | | |
|---|---|---|---|---|---|---|---|
| Site | Atom | Wyckoff position | x | y | z | Occupancy | Uiso |
| A | Y1 | 24c | 0.125 | 0 | 0.25 | 1 | 0.03(1) |
| B(VI) | Y2/ Al1 | 16a | 0 | 0 | 0 | 0.100(4) / 0.899(1) | 0.03(4) |
| B(IV) | Al2 | 24d | 0.375 | 0 | 0.25 | 1 | 0.03(4) |
| O | O1 | 96h | - 0.0300(1) | 0.0512(1) | 0.1504(1) | 1 | 0.03(8) |
| *a = 12.06976(2) Å, *V* = 1758.31 (1) Å³, space group la-3d, *Z* = 8 for Y_{3.225}Al_{4.775}O₁₂. | | | | | | | |

**Table 9:**

| **Y_{3.25}Al_{4.75}O₁₂** | | | | | | | |
|---|---|---|---|---|---|---|---|
| Site | Atom | Wyckoff position | x | y | z | Occupancy | Uisox100 |
| A | Y1 | 24c | 0.125 | 0 | 0.25 | 1 | 0.6(2) |
| B(VI) | Y2/ Al1 | 16a | 0 | 0 | 0 | 0.1081(1) / 0.892(1) | 0.3(7) |
| B(IV) | Al2 | 24d | 0.375 | 0 | 0.25 | 1 | 0.2(7) |
| O | O1 | 96h | - 0.03089(5) | 0.05171(7) | 0.15034(5) | 1 | 0.8(1) |
| *a = 12.076942(7) A *V* = 1761.453(3) Å³, space group la-3d, *Z* = 8 for Y_{3.25}Al_{4.75}O₁₂. | | | | | | | |

**Table 10:**

| **Y_{3.275}Al_{4.725}O₁₂** | | | | | | | |
|---|---|---|---|---|---|---|---|
| Site | Atom | Wyckoff position | x | y | z | Occupancy | Uiso |
| A | Y1 | 24c | 0.125 | 0 | 0.25 | 1 | 0.04(1) |
| B(VI) | Y2 / Al1 | 16a | 0 | 0 | 0 | 0.120(5) / 0.879(5) | 0.03(4) |
| B(IV) | Al2 | 24d | 0.375 | 0 | 0.25 | 1 | 0.04(4) |
| O | O1 | 96h | -0.0294(1) | 0.0503(2) | 0.1507(2) | 1 | 0.05(6) |
| *a = 12.08494(3) Å *V* = 1764.95(1) Å³, space group la-3d, *Z* = 8 for Y₃.₂₇₅Al_{4.725}O₁₂. | | | | | | | |

**Table 11:**

| **Y_{3.2a}Al_{4.72}O₁₂** | | | | | | | |
|---|---|---|---|---|---|---|---|
| Site | Atom | Wyckoff position | x | y | z | Occupancy | Uiso |
| A | Y1 | 24c | 0.125 | 0 | 0.25 | 1 | 0.02(1) |
| B(VI) | Y2/ Al1 | 16a | 0 | 0 | 0 | 0.121(3)/ 0.878(3) | 0.02(3) |
| B(IV) | Al2 | 24d | 0.375 | 0 | 0.25 | 1 | 0.02(3) |
| O | O1 | 96h | -0.0306(1) | 0.0513(1) | 0.1502(1) | 1 | 0.03(7) |
| *a = 12.08520(2) Å V= 1765.06(1) Å³, space group la-3d, *Z* = 8 for Y_{3.28}Al₄.₇₂O₁₂. | | | | | | | |

**Table 12:**

| **Y_{2.34}Yb_{0.6}Er_{0.06}Al₅O₁₂** | | | | | | | |
|---|---|---|---|---|---|---|---|
| Site | Atom | Wyckoff position | x | y | z | Occupancy | Uisox100 |
| A | Y1 / Yb1 / Er1 | 24c | 0.125 | 0 | 0.25 | 0.780(1) / 0.200(1) / 0.020(1) | 0.184(3) |
| B(VI) | Al1 | 16a | 0 | 0 | 0 | 1 | 0.003(9) |
| B(IV) | Al2 | 24d | 0.375 | 0 | 0.25 | 1 | 0.159(9) |
| O | O1 | 96h | - 0.03036(6) | 0.05112(7) | 0.14921 (7) | 1 | 0.01(1) |
| *a = 11.995104(7) Å, *V* = 1725.886(3) Å³, space group la-3d, *Z* = 8 for Y _{2.34} Y_{b0.6}Er_{0.06}Al₅O₁₂. | | | | | | | |

**Table 13:**

| **Y_{2.496}Yb_{0.64}Er_{0.064}Al_{4.8}O₁₂** | | | | | | | |
|---|---|---|---|---|---|---|---|
| Site | Atom | Wyckoff position | x | y | z | Occupancy | Uiso |
| A | Y1/ Yb1/ Er1 | 24c | 0.125 | 0 | 0.25 | 0.82(6)/ 0.161(1)/ 0.016(1) | 0.02(1) |
| B(VI) | Al1/ Y2/ Yb2/ Er2 | 16a | 0 | 0 | 0 | 0.899(3)/ 0.020(1) / 0.081(1)/ 0.008(1) | 0.02(2) |
| B(IV) | Al2 | 24d | 0.375 | 0 | 0.25 | 1 | 0.03(1) |
| O | O1 | 96h | - 0.0318(1) | 0.0532(1) | 0.1517(1) | 1 | 0.02(4) |
| *a = 12.06287(3) Å, *V =* 1755.31 (1) Å³, space group la-3d, Z = 8 for Y_{2.496}Yb_{0.64}Er_{0.064}Al_{4.8}O₁₂. | | | | | | | |

**Table 14. Cell parameter of 4 compositions from group 2 and all compositions from group 3 in Table 2.**

| Composition number | Composition | Cell parameter (Å) |
|---|---|---|
| 1 | Ce_{0.064}Y_{3.136}Al_{4.8}O₁₂ | 12.072(1) |
| 2 | Ce₀.₁₆Y_{3.04}Al_{4.8}O₁₂ | 12.080(1) |
| 3 | Dy_{0.032}Y_{3.168}Al_{4.8}O₁₂ | 12.063(1) |
| 4 | Mn_{0.016}Y_{3.184}Al_{4.8}O₁₂ | 12.062(1) |
| 5 | Er_{3.1}Al_{4.9}O₁₂ | 12.030(1) |
| 6 | Gd_{3.1}Ga_{4.9}O₁₂ | 12.414(1) |
| 7 | Sm_{3.1}Ga_{4.9}O₁₂ | 12.473(1) |
| 8 | Gd_{3.2}Ga_{4.8}O₁₂ | 12.461(1) |
| 9 | Sm_{3.2}Ga_{4.8}O₁₂ | 12.495(1) |

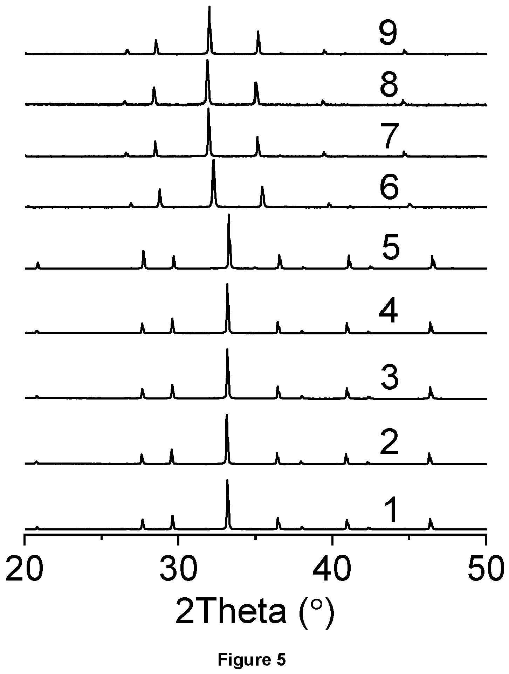

X-ray powder diffraction data of compositions 1 to 9 mentioned in Table 14 are represented on figure 5.

### Example 2: Luminescence properties

**LUMINESCENCE.** Upconversion emission spectra were measured using a FLS1000 photoluminescence spectrometer (Edinburgh Instruments) equipped with a 2 W 980 nm laser as the excitation source.

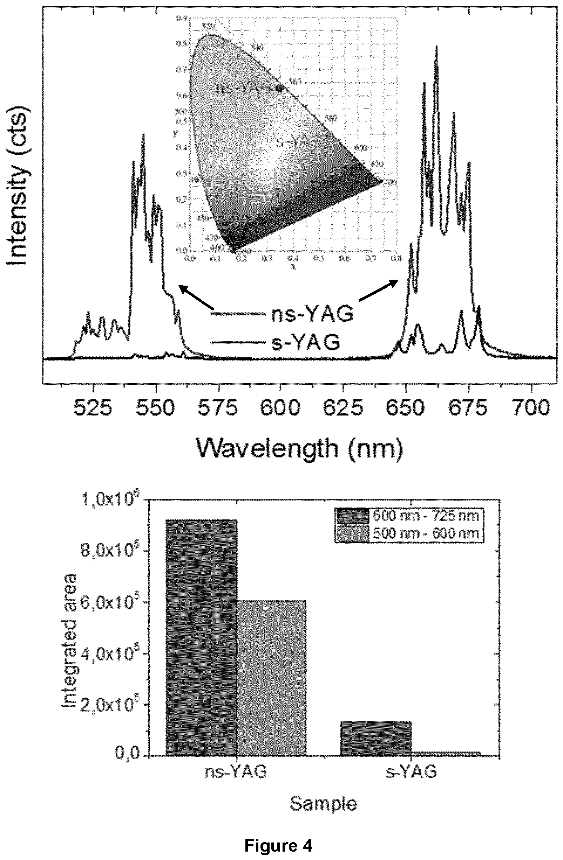

Reference is made to figures 3 and 4 and results are detailed below.

The up-conversion (UC) spectra of both s-YAG and ns-YAG (doped with 20%Tb,2%Er) show emission bands in the green and red regions when excited with a 980 nm laser (figure 3). Both spectra show notable differences to each other as described below:
The red and green bands are fine structured due to the different electronic transitions in the 4f energy levels of Er3+. The fine structure of the red band in the s-YAG spectrum is however different from that in the ns-YAG spectrum, and the same is true for the fine structure of the green band. These differences could be possibly ascribed to different Er/Yb environments in both samples.

The intensity ratio of the red to green band is close to 1 for the ns-YAG spectrum while it is much higher than 1 for s-YAG. This fact is responsible for the different emission colours observed for both samples under the 980 nm laser. Thus, while ns-YAG shows an almost pure green emission, s-YAG emits a yellow colour (produced by the mixture of the green and red emissions).

Finally, the most significant difference between the UC emission of s-YAG and ns-YAG is that the integrated area of the UC spectrum of the ns-YAG doped with 20%Yb,2%Er is around one order of magnitude higher than that of the s-YAG doped in the same way (figure 3, left). The result is that ns-YAG emits a really strong green light while just a pale yellow emission is observed for s-YAG (figure 4).

### List of references

**[1]** Journal of the European Ceramic Society 34 (2014) 783-790.

## Claims

1. A ceramic material with a garnet structure showing a non-stoichiometry:
A_{3+x-y}B_{5-x-z}C_{y+z}O₁₂ Formula I
wherein,
- A represents at least one rare earth element, preferably chosen in the group comprising yttrium and lanthanides, and mixtures thereof, more preferably in the group comprising yttrium, lanthanum, cerium, praseodymium, neodymium, samarium, europium, gadolinium, terbium, dysprosium, holmium, erbium, thulium, ytterbium, lutetium and mixtures thereof,
- B represents scandium, at least one transition metal and/or post-transition metal element, preferably chosen in the group comprising scandium, aluminium, gallium, iron, manganese, cobalt, and mixtures thereof, and more preferably aluminium, gallium and mixtures thereof,
- C represents at least one lanthanide, transition metal and/or post-transition metal element different from A or B, preferably chosen in the group comprising cerium, praseodymium, neodymium, samarium, europium, gadolinium, terbium, dysprosium, holmium, erbium, thulium, ytterbium, bismuth, chromium, manganese, nickel, titanium and mixtures thereof,
- x is strictly superior to 0.01 and inferior or equal to 0.5, 0.01 < x ≤ 0.5, preferably 0.05 ≤ x ≤ 0.4, and more preferably 0.1 ≤ x ≤ 0.3,
- y is superior or equal to 0 and inferior or equal to 0.7, 0 ≤ y ≤ 0.7,
- z is superior or equal to 0 and inferior or equal to 0.7, 0 ≤ z ≤ 0.7, and
- y+z≤0.7.

2. The ceramic material according to claim 1, wherein A represents at least one rare earth element chosen in the group comprising yttrium, lanthanum, cerium, praseodymium, neodymium, samarium, europium, gadolinium, terbium, dysprosium, holmium, erbium, thulium, ytterbium, lutetium and mixtures thereof, preferably yttrium, erbium, gadolinium, samarium, neodymium, lutetium and mixtures thereof, and more preferably yttrium, erbium, gadolinium, samarium and mixtures thereof.

3. The ceramic material according to any of preceding claims, wherein B represents at least one transition metal or post-transition metal element chosen in the group comprising aluminium, gallium, iron, manganese, cobalt and scandium and mixtures thereof, preferably aluminium, gallium and mixtures thereof.

4. The ceramic material according to any of preceding claims, wherein C represents at least one lanthanide, transition metal or post-transition metal element different from A or B, chosen in the group comprising gadolinium, terbium, dysprosium, holmium, erbium, thulium, ytterbium, manganese and mixtures thereof, preferably chosen in the group comprising cerium, dysprosium, ytterbium, erbium, manganese and mixtures thereof.

5. The ceramic material of formula II:
A_{3+x-y}B_{5-x-z}C_{y+z}O₁₂ Formula II
wherein,
- A represents at least one rare earth element chosen in the group comprising yttrium, erbium, gadolinium, samarium, neodymium, lutetium and mixtures thereof,
- B represents at least one transition metal or post-transition metal element chosen in the group comprising aluminium, gallium, iron, manganese, cobalt and scandium and mixtures thereof,
- C represents at least one lanthanide, transition metal or post-transition metal element different from A or B, chosen in the group comprising gadolinium, terbium, dysprosium, holmium, erbium, thulium, ytterbium and mixtures thereof,
- x is strictly superior to 0.01 and inferior or equal to 0.5, 0.01 < x ≤ 0.5, preferably 0.05 ≤ x ≤ 0.4, and more preferably 0.1 ≤ x ≤ 0.3,
- y is superior or equal to 0 and inferior or equal to 0.7, 0 ≤ y ≤ 0.7,
- z is superior or equal to 0 and inferior or equal to 0.7, 0 ≤ z ≤ 0.7, and
- y+z≤0.7.

6. The ceramic material of formula III:
Y_{3+x-y}B_{5-x-z}C_{y+z}O₁₂ Formula III
wherein,
- B represents at least one transition metal or post-transition metal element chosen in the group comprising aluminium, gallium, iron, cobalt, manganese and scandium and mixtures thereof,
- C represents at least one lanthanide, transition metal or post-transition metal element different from A or B, chosen in the group comprising chromium, cerium, neodymium, gadolinium, terbium, dysprosium, holmium, erbium, thulium, ytterbium and mixtures thereof,
- x is strictly superior to 0.01 and inferior or equal to 0.5, 0.01 < x ≤ 0.5, preferably 0.05 ≤ x ≤ 0.4, and more preferably 0.1 ≤ x ≤ 0.3,
- y is superior or equal to 0 and inferior or equal to 0.7, 0 ≤ y ≤ 0.7,
- z is superior or equal to 0 and inferior or equal to 0.7, 0 ≤ z ≤ 0.7, and
- y+z≤0.7.

7. The ceramic material of formula IV:
A_{3+x-y}Al_{5-x+z}C_{y-z}O₁₂ Formula IV
wherein,
- A represents at least one rare earth element chosen in the group comprising yttrium, erbium, gadolinium, samarium, neodymium, lanthanum, lutetium and mixtures thereof, preferably yttrium, lanthanum, gadolinium, lutetium and mixtures thereof,
- C represents at least one rare earth, transition metal or post-transition metal element different from A or B, chosen in the group comprising europium, gadolinium, terbium, dysprosium, holmium, erbium, thulium, ytterbium, chromium and mixtures thereof,
- x is strictly superior to 0.01 and inferior or equal to 0.5, 0.01 < x ≤ 0.5, preferably 0.05 ≤ x ≤ 0.4, and more preferably 0.1 ≤ x ≤ 0.3,
- y is superior or equal to 0 and inferior or equal to 0.7, 0 ≤ y ≤ 0.7,
- z is superior or equal to 0 and inferior or equal to 0.7, 0 ≤ z ≤ 0.7, and
- y+z≤0.7.

8. The ceramic material of formula V:
A_{3+x-y}Ga_{5-x+z}C_{y+z}O₁₂ Formula V
wherein,
- A represents at least one rare earth element chosen in the group comprising yttrium, lanthanum, erbium, gadolinium, terbium, samarium, neodymium, lutetium and mixtures thereof and preferably yttrium, lanthanum, gadolinium, lutetium and mixtures thereof,
- C represents at least one rare earth, transition metal or post-transition metal element different from A or B, chosen in the group comprising europium, gadolinium, terbium, dysprosium, holmium, erbium, thulium, ytterbium and mixtures thereof,
- x is strictly superior to 0.01 and inferior or equal to 0.5, 0.01 < x ≤ 0.5, preferably 0.05 ≤ x ≤ 0.4, and more preferably 0.1 ≤ x ≤ 0.3,
- y is superior or equal to 0 and inferior or equal to 0.7, 0 ≤ y ≤ 0.7,
- z is superior or equal to 0 and inferior or equal to 0.7, 0 ≤ z ≤ 0.7, and
- y+z≤0.7.

9. The ceramic material of formula VI:
A₃₊ₓAl₅₋ₓO₁₂ Formula VI
wherein,
- A represents at least one rare earth element chosen in the group comprising yttrium, terbium, erbium, gadolinium, samarium, neodymium, ytterbium, lutetium and mixtures thereof,
- x is strictly superior to 0.01 and inferior or equal to 0.5, 0.01 < x ≤ 0.5, preferably 0.05 ≤ x ≤ 0.4, and more preferably 0.1 ≤ x ≤ 0.3.

10. The ceramic material of formula VII:
A₃₊ₓGa₅₋ₓO₁₂ Formula VII
wherein,
- A represents at least one rare earth element chosen in the group comprising yttrium, erbium, gadolinium, terbium, samarium, neodymium, lutetium and mixtures thereof,
- x is strictly superior to 0.01 and inferior or equal to 0.5, 0.01 < x ≤ 0.5, preferably 0.05 ≤ x ≤ 0.4, and more preferably 0.1 ≤ x ≤ 0.3.

11. The ceramic material of formula VIII:
Y_{3+x-y}Al₅₋ₓC_{y}O₁₂ Formula VIII
wherein,
- C represents at least one rare earth, transition metal or post-transistion metal element different from A or B, chosen in the group comprising cerium, praseodymium, neodymium, samarium, europium, gadolinium and mixtures thereof,
- x is strictly superior to 0.01 and inferior or equal to 0.5, 0.01 < x ≤ 0.5, preferably 0.05 ≤ x ≤ 0.4, and more preferably 0.1 ≤ x ≤ 0.3,
- y is superior or equal to 0 and inferior or equal to 0.7, 0 ≤ y ≤ 0.7,
- z is superior or equal to 0 and inferior or equal to 0.7, 0 ≤ z ≤ 0.7, and
- y+z≤0.7.

12. The ceramic material of formula IX:
Y₃₊ₓAl₅₋ₓO₁₂ Formula IX
wherein,
- x is strictly superior to 0.01 and inferior or equal to 0.5, 0.01 < x ≤ 0.5, preferably 0.05 ≤ x ≤ 0.4, and more preferably 0.1 ≤ x ≤ 0.3.

13. A process of manufacture of the ceramic material according to any of preceding claims, comprising the steps:
a) mixing one least one A precursor, at least one B precursor and optionally at least one C precursor, the precursors preferably being oxides, according to the molar ratio of the ceramic material of formula I, II, III, IV, V, VI, VII, VIII or IX and pressing the mixture into pellet under an uniaxial pressure;
b) melting the pellet obtained in step a) at a temperature ≥ 1800°C, preferably at a temperature ≥ 2000°C, to obtain a molten bead;
c) quenching of the molten compound obtained in step b), preferably a shear quenching of the molten liquid by gas jets.

14. A lighting article comprising a ceramic material according to any of claims 1 to 12.

15. Use of a ceramic material according to claim 1 to 12 in a lighting article.
